# EUROPÄISCHE PATENTSCHRIFT

(11) **EP 2 409 580 B1**
(45) Veröffentlichungstag und Bekanntmachung des Hinweises auf die Patenterteilung: **28.11.2012**
(21) Anmeldenummer: 11164304.5
(22) Anmeldetag: 29.04.2011
(51) Int. Cl.: A23L 2/46, A23L 3/18

(54) **Verfahren und Vorrichtung zur Medienführung durch eine thermische Behandlungsanlage für ein flüssiges Produkt**
Method and device for guiding media through a thermic treatment assembly for a liquid product
Procédé et dispositif de guidage de fluides à travers une installation de traitement thermique pour un produit liquide

(30) Priorität: 23.07.2010 DE 102010038319
(43) Veröffentlichungstag der Anmeldung: 25.01.2012
(73) Patentinhaber: Krones AG, 93073 Neutraubling (DE)
(72) Erfinder: Rickert, Ludger, 85356, Freising (DE); Recktenwald, Dirk, 93077 Bad Abbach (DE); Enzmann, Katja, 93053, Regensburg (DE)
(74) Vertreter: Grünecker, Kinkeldey, Stockmair & Schwanhäusser

(56) Entgegenhaltungen:
- WO-A1-00/58223
- GB-A- 937 782

## Beschreibung

Die Erfindung betrifft ein Verfahren und eine Vorrichtung zur Medienführung durch eine Behandlungsanlage, insbesondere durch eine thermische Behandlungsanlage, für ein flüssiges Produkt, insbesondere ein Getränk.

Anlagen zur thermischen Produktbehandlung von Getränken haben üblicherweise ein Fassungsvermögen von etwa 1.000 - 5.000 Liter. Erfahrungsgemäß wird zur erfolgreichen Produktbehandlung mindestens eine dem Fassungsvermögen der Behandlungsanlage entsprechende Produktmenge benötigt. Beispielsweise können Restmengen am Ende einer Produktionscharge, die kleiner als das Fassungsvermögen der Behandlungsanlage sind, nicht verarbeitet werden. Ebenso ist es nicht möglich, eine Charge, die kleiner ist als das Fassungsvermögen der Behandlungsanlage, zu behandeln. Es wäre jedoch wünschenswert, das zu behandelnde Produkt möglichst vollständig verwerten zu können.

Außerdem ist es üblich, bei einem eingangsseitigen Medienwechsel, beispielsweise wenn das zu behandelnde Produkt vollständig in die Behandlungsanlage eingelaufen ist und das noch in der Behandlungsanlage befindliche Produkt mit Wasser ausgeschoben wird, den Produktauslauf zustandsabhängig zu schalten. Somit geht im ungünstigsten Fall beim Ende der Behandlung eine Produktmenge entsprechend dem Fassungsvermögen der Behandlungsanlage verloren. Es besteht somit Bedarf, den Produktverlust bei einem Medienwechsel zu verringern.

Außerdem wird üblicherweise eine Produktrückführleitung, die dafür vorgesehen ist, um bei einem Stillstand einer nachgeordneten Produktionseinheit das Produkt im Kreislauf zu fahren, bereits zu Beginn der Behandlung gefüllt, bevor das behandelte Produkt zur Zwischenlagerung weiter geleitet wird. Dies bedingt jedoch, dass die Produktrückführleitung auch bei einem störungsfreien Betrieb der nachgeschalteten Produktionsanlage gefüllt wird, obwohl dies aus produktionstechnischer Sicht nicht notwendig wäre. Das in die Produktrückführleitung eingeleitete behandelte Produkt muss nach der Behandlung dann verworfen werden. Es wäre wünschenswert, auch diesen Produktverlust zu minimieren.

Ein weiteres Problem beim Medienwechsel an einer thermischen Produktbehandlungsanlage entsteht bei Systemen, in die ein Entgaser integriert ist. Bei einem Medienwechsel wird der Produktstrom am Entgaser üblicherweise unterbrochen, so dass das in einem dem Entgaser vorgeschalteten Wärmetauscher vorhandene Medium für unerwünscht lange Zeit in diesem verweilt und übermäßig erwärmt wird. Dies verschlechtert die Produktqualität. Der Entgaser muss außerdem anschließend mit einer stark erhöhten Durchflussgeschwindigkeit wieder gefüllt werden, wodurch eine verringerte Wärmeaufnahme des durchgeleiteten Mediums resultiert, wodurch wiederum die Produktqualität leiden kann, beispielsweise durch eine verringerte Effektivität der Entgasung.

GB 937 782 A offenbart eine Anlage für die Wärmebehandlung von Flüssigkeiten wie Milch und Obstsäfte, welche einen Flüssigkeitsbehälter, eine Vorrichtung zur Entgasung und Deodorisierung der Flüssigkeit im Behälter, eine Pumpe, welche die Flüssigkeit zu einem Dampfbehandlungsraum transportiert, ein dreifaches, temperaturkontrolliertes Ventil, und eine Rückführungsleitung zwischen Ventil und Behälter, um unzureichend erhitzte Flüssigkeit zurückzuleiten zum Behälter, umfasst.

Es besteht daher der Bedarf für ein Verfahren und eine Vorrichtung, mit dem/der die oben genannten Probleme abgemildert oder gar beseitigt werden können.

Die gestellte Aufgabe wird mit einem Verfahren nach Anspruch 1 gelöst. Demnach umfasst das Verfahren folgende Schritte: a) Ausschieben eines ersten wässrigen Mediums aus der Behandlungsanlage durch eine ausgangsseitige Produktleitung mit Hilfe eines zweiten wässrigen Mediums, wobei das Volumen des dabei in die Behandlungsanlage eingeleiteten zweiten wässrigen Mediums ermittelt wird, insbesondere in Form einer kontinuierlichen Volumenzählung; und b) Absperren der ausgangsseitigen Produktleitung, so dass das zweite wässrige Medium nicht in die Produktleitung einströmen kann, wobei ein Auslöser zum Absperren der ausgangsseitigen Produktleitung auf Grundlage des im Schritt a) ermittelten Volumens und eines nominellen Fassungsvermögens der Behandlungsanlage berechnet wird. Dadurch ist es möglich, den Vorgang des Absperrens der ausgangsseitigen Produktleitung von dem Vorgang des Einleitens des zweiten wässrigen Mediums zeitlich zu entkoppeln. Es kann somit das Vordringen des zweiten wässrigen Mediums in die Zwischenlagerung verfolgt werden und die ausgangsseitige Produktleitung abgesperrt werden, bevor das zweite wässrige Medium diese füllt. Der Zeitpunkt des Absperrens kann somit kontrolliert werden. Entsprechend kann das erste wässrige Medium so lange durch die ausgangsseitige Produktleitung ausgeleitet und verwertet werden, bis das zweite wässrige Medium die ausgangsseitige Produktleitung erreicht.

Die gestellte Aufgabe wird ferner gelöst mit einem Verfahren nach Anspruch 2, bei dem der Schritt b) durch einen Schritt c) ersetzt ist, in dem die ausgangsseitige Produktleitung geöffnet wird, so dass das zweite wässrige Medium in die Produktleitung einströmen kann, wobei ein Auslöser zum Öffnen der ausgangsseitigen Produktleitung auf Grundlage des im Schritt a) ermittelten Volumens und eines nominellen Fassungsvermögens der Behandlungsanlage berechnet wird. Dadurch lässt sich das Vordringen des zweiten wässrigen Mediums durch die Behandlungsanlage nachverfolgen, so dass die ausgangsseitige Produktleitung unmittelbar nach einem Zeitpunkt geöffnet werden kann, zu dem das erste wässrige Medium aus der Behandlungsanlage ausgeleitet worden ist. Das zweite wässrige Medium kann somit gezielt der weiteren Produktion zugeführt werden und verhindert werden, dass das erste wässrige Medium in die nachgeschaltete Produktionsanlage eingeleitet wird. Somit kann auch das Öffnen der ausgangsseitigen Produktleitung von einem eingangsseitigen Medienwechsel zeitlich entkoppelt werden.

Vorzugsweise ist das erste wässrige Medium bei dem ersten erfindungsgemäßen Verfahren das Produkt und das zweite wässrige Medium Wasser. Somit lässt sich auch das Ende einer behandelten Produktcharge mit geringem Produktverlust einer nachfolgenden Produktionseinheit, wie beispielsweise einem Zwischenlagertank, zuführen. Gleichzeitig kann verhindert werden, dass Wasser in die nachgeschaltete Produktionseinheit geleitet wird.

Vorzugsweise ist das erste wässrige Medium bei dem zweiten erfindungsgemäßen Verfahren Wasser und das zweite wässrige Medium ist das Produkt. Somit kann auch der Anfang einer behandelten Produktcharge mit geringem Produktverlust an eine nachgeschaltete Produktionseinheit, wie beispielsweise einem Zwischenlagertank, weitergeleitet werden.

Bei einer günstigen Ausgestaltung des Verfahrens ist das eingeleitete Volumen des Produkts kleiner als das nominelle Fassungsvermögen der Behandlungsanlage. Die Behandlungsanlage lässt sich somit besonders flexibel nutzen, indem auch sehr kleine Chargen behandelt werden können. Dies ist beispielsweise möglich, indem Wasser aus der Behandlungsanlage entsprechend dem zweiten erfindungsgemäßen Verfahren mit Produkt ausgeschoben wird und das Produkt wiederum gemäß dem ersten erfindungsgemäßen Verfahren mit Wasser ausgeschoben wird. Durch eine Kombination des ersten und zweiten erfindungsgemäßen Verfahrens lässt sich somit ein behandeltes Produkt besonders effizient behandeln und zuverlässig von Ausschubwasser trennen.

Vorzugsweise wird durch einen Wechsel der Medienzufuhr an einer bestimmten Stelle der Produktzufuhr von dem ersten wässrigen Medium auf das zweite wässrige Medium eine Volumenmessung des in die Behandlungsanlage eingeleiteten zweiten wässrige Mediums gestartet. Dadurch lässt sich eine Volumenmessung besonders effektiv und auf einfache Weise starten. Somit lässt sich das Vordringen des zweiten wässrigen Mediums durch die Behandlungsanlage unabhängig von einer Änderung des Betriebszustandes der Behandlungsanlage verfolgen. Vorzugsweise wird ein einem Wechsel der Medienzufuhr zugeordneter erster Marker erzeugt, falls das zweite wässrige Medium das Produkt ist, und/oder ein zweiter Marker, falls das zweite wässrige Medium Wasser ist, um den Start der Volumenmessung dem jeweiligen Medium zuzuordnen. Damit lässt sich beispielsweise dem Anfang und dem Ende einer Produktcharge innerhalb der Behandlungsanlage ein Marker zuordnen, um den Anfang und/oder das Ende der Produktcharge entlang des Produktstroms innerhalb der Behandlungsanlage zu lokalisieren.

Bei einer besonders günstigen Ausgestaltung wird das im Schritt a) ermittelte Volumen mit dem nominellen Fassungsvermögen der Behandlungsanlage verglichen, oder es wird ein Verhältnis aus dem ermittelten Volumen und dem nominellen Fassungsvermögen berechnet, um jeweils die Position eines Übergangsbereichs von dem ersten zum zweiten wässrigen Medium in der Behandlungsanlage zu ermitteln. Dies ist insbesondere eine Position bezogen auf die Produktströmungsrichtung, beispielsweise ein Leitungsabschnitt der Behandlungsanlage. Dadurch lässt sich die ausgangsseitige Produktleitung absperren oder öffnen, bevor der Übergangsbereich die Produktleitung erreicht. Entsprechend lässt sich zuverlässig vermeiden, dass Wasser in eine nachgeschaltete Produktionseinheit weitergeleitet wird, und/oder dass ein erheblicher Anteil des behandelten Produkts verworfen werden muss.

Vorzugsweise wird ferner eine Zuförderrate zu einer in der Behandlungsanlage vorgesehenen Entgasungseinheit hin, insbesondere bei einem Medienwechsel, niedriger eingestellt als eine Abförderrate von der Entgasungseinheit weg, um den Füllstand des ersten wässrigen Mediums in der Entgasungseinheit auf einen vorgegebenen Mindestwert zu einem Zeitpunkt abzusenken, an dem das zweite wässrige Medium beginnt, in die Entgasungseinheit einzulaufen. Dadurch kann vermieden werden, dass die Zuförderung bei einem Medienwechsel unterbrochen werden muss, um ein Entleeren der Entgasungseinheit zu ermöglichen. Somit kann eine Überhitzung des nachströmenden Mediums im Eingangsbereich der Entgasungseinheit vermieden werden. Vorzugsweise wird die Zuförderrate um 1 bis 20 % niedriger eingestellt als die Abförderrate.

Vorzugsweise wird ferner die Zuförderrate beim Einlaufen des zweiten wässrigen Mediums in die Entgasungseinheit höher eingestellt als die Abförderrate, um den Füllstand des zweiten wässrigen Mediums auf einen Sollfüllstand anzuheben. Dadurch kann der Füllstand gleichmäßig angehoben werden, ohne das zweite wässrige Medium mit einer unerwünscht hohen Zuförderrate zufördern zu müssen und dadurch die Effektivität der Entgasung zu reduzieren. Somit kann darüber hinaus eine Untererhitzung des nachströmenden Mediums im Eingangsbereich der Entgasungseinheit vermieden werden. Vorzugsweise wird die Zuförderrate um 1 bis 20 % höher eingestellt als die Abförderrate.

Eine besonders günstige Ausgestaltung des Verfahrens umfasst ferner einen auf den Schritt c) folgenden Schritt d), in dem: die Behandlungsanlage von dem Produkt durchströmt wird; ein erster Betriebszustand durch einen Zustand vor einer erstmaligen Unterbrechung des Produktstroms in einer nachgeschalteten Produktionsanlage definiert ist; ein zweiter Betriebszustand durch einen Zustand nach der erstmaligen Unterbrechung des Produktstroms in der nachgeschalteten Produktionsanlage definiert ist; eine Produktrücklaufleitung der Behandlungsanlage im ersten Betriebszustand mit Wasser gefüllt ist; das Wasser bei der Unterbrechung des Produktstroms mit dem Produkt ausgeschoben wird; und die Produktrücklaufleitung im zweiten Betriebszustand mit Produkt gefüllt ist.

Dadurch kann vermieden werden, dass die Produktrücklaufleitung mit Produkt gefüllt werden muss, obwohl die Behandlungsanlage ordnungsgemäß im ersten Betriebszustand betrieben werden kann. Anders gesagt, wird die Produktrücklaufleitung nur bei einer Unterbrechung des Produktstroms in einer nachgeschalteten Produktionsanlage mit Produkt gefüllt. Dadurch kann vermieden werden, dass das Produkt bei einem Stillstand einer nachgeschalteten Produktionseinheit in der Behandlungsanlage zum Stehen kommt. Somit lässt sich eine Überhitzung des Produkts in Wärmetauschern der thermischen Behandlungsanlage vermeiden. Somit kann vermieden werden, dass Produkt unnötigerweise verworfen werden muss.

Vorzugsweise ist dem ersten und dem zweiten Betriebszustand jeweils ein Marker zugeordnet, um bei einer Unterbrechung des Produktstroms in der nachgeschalteten Produktionsanlage entweder zunächst Wasser aus der Produktrückführleitung auszuschieben oder Produkt zurückzuführen. Es kann somit bei mit Produkt gefüllter Rückführleitung sofort bei Erkennen einer fehlenden Produktanforderung auf eine Produktrückführung umgeschaltet werden.

Die gestellte Aufgabe wird ferner gelöst mit einer Vorrichtung nach Anspruch 13. Demnach umfasst die Vorrichtung: eine Volumenmesseinrichtung zum Messen eines durch die Behandlungsanlage geleiteten Flüssigkeitsvolumens; eine ausgangsseitige Produktleitung zum Weiterleiten des behandelten Produkts in Richtung einer nachfolgenden Produktionseinheit, insbesondere eines Zwischenlagertankes; eine Absperreinrichtung zum Absperren oder Öffnen der ausgangsseitigen Produktleitung; eine Auswerteeinrichtung, die eingerichtet ist, mindestens ein Messergebnis der Volumenmesseinrichtung mit einem nominellen Fassungsvermögen der Behandlungsanlage zu vergleichen; und eine Auslöseeinrichtung, die die Absperreinrichtung in einen geöffneten oder geschlossenen Zustand in Abhängigkeit des Vergleichs in der Auswerteeinrichtung versetzen kann.

Die Absperreinrichtung kann somit unabhängig von der Umschalteinrichtung betätigt werden. Das Vordringen des ersten oder zweiten Mediums durch die Behandlungsanlage kann unabhängig von dem Schaltzustand der Umschalteinrichtung verfolgt werden. Insbesondere kann der Zeitpunkt des Absperrens oder Öffnens der Absperreinrichtung in Abhängigkeit von dem jeweiligen Fassungsvermögen der Behandlungsanlage optimiert werden. Zum Einen kann das Produkt mit geringen Produktverlusten an eine nachgeschaltete Produktionseinheit weitergeleitet werden, zum Anderen kann vermieden werden, dass Wasser zum Ausschieben des Produkts in die nachfolgende Produktionseinheit gelangt.

Eine besonders günstige Ausgestaltung der Vorrichtung umfasst ferner einen Signalgeber zum Erzeugen eines einem Wechsel der Medienzufuhr in die Behandlungsanlage zugeordneten Markers. Damit ist es möglich, ein Produkt- oder Wasservolumen mit einem kontinuierlich laufenden Volumenzähler zu bestimmen. Durch den Marker kann insbesondere ein an die Volumenmesseinrichtung gekoppelter Zähler gestartet werden. Der Zähler kann beim Betätigen der ausgangsseitigen Absperreinrichtung wieder auf Null gestellt werden.

Vorzugsweise umfasst die Behandlungsanlage eine Entgasungseinheit, eine erste im Produktstrom vor und eine zweite im Produktstrom nach der Entgasungseinheit angeordnete Pumpe, wobei ferner eine Steuerungseinrichtung vorgesehen ist, die die Förderrate der ersten Pumpe in Abhängigkeit von einem Füllstand in der Entgasungseinheit und/oder in einem der Entgasungseinheit vorgeschalteten Behälter einstellen kann. Dadurch ist es möglich, die Entgasungseinheit bei einem bevorstehenden Medienwechsel kontinuierlich zu entleeren, ohne den Produktstrom durch die Entgasungseinheit, insbesondere durch einen der Entgasungseinheit vorgeschalteten Wärmetauscher, zu unterbrechen, um ein unerwünschte negative Beeinträchtigung der Produktqualität insbesondere durch Überhitzen des Produkts bei einem Stillstand des Produktstroms zu vermeiden. Alternativ könnte auch die Förderrate der zweiten Pumpe eingestellt werden oder beide Förderraten.

Bevorzugte Ausführungsformen der Erfindung sind in der Zeichnung dargestellt. Es zeigen:
- Figur 1A: eine schematische Darstellung einer ersten Ausführungsform der erfindungsgemäßen Vorrichtung in einem Betriebszustand zu Beginn des Einfahrens eines Produkts in eine thermische Behandlungsanlage;
- Figur 1B: die Anordnung aus Figur 1A während des Einfahrens des Produkts;
- Figur 1C: die Anordnung aus Figur 1A bei einem eingangsseitigen Medienwechsel, nachdem dem das Produkt vollständig in die thermische Behandlungsanlage eingeleitet wurde;
- Figur 1D: die Anordnung aus Figur 1A in einen Betriebszustand, bei dem das behandelte Produkt mit Wasser ausgeschoben wird und eine ausgangsseitige Absperreinrichtung erreicht;
- Figur 1 E: die Anordnung aus Figur 1A in einen Betriebszustand, in dem das behandelte Produkt weiter ausgeschoben wird und an eine nachgeschaltete Produktionseinheit weitergeleitet wird;
- Figur 1 F: die Anordnung aus Figur 1A in einen Betriebszustand, in dem das Produkt vollständig mit Wasser aus der thermischen Behandlungsanlage ausgeschoben wurde;
- Figur 2A: eine zweite Ausführungsform der erfindungsgemäßen Vorrichtung in einem Betriebszustand unmittelbar vor einer eingangsseitigen Umschaltung der Medienzuführung;
- Figur 2B: die Anordnung aus Figur 2A in einen Betriebszustand, in dem der Füllstand eines ersten wässrigen Mediums in einer Entgasungseinheit kontinuierlich abgesenkt wird;
- Figur 2C: die Anordnung aus Figur 2A in einen Betriebszustand, in dem das erste wässrige Medium einen minimalen Füllstand in der Entgasungseinheit erreicht hat und ein zweites wässriges Medium am Eingang der Entgasungseinheit ansteht;
- Figur 2D: die Anordnung aus Figur 2A in einen Betriebszustand, in dem das zweite wässrige Medium durch die Entgasungseinheit geleitet und dessen Füllstand angehoben wird; und
- Figur 3: eine dritte Ausführungsform der erfindungsgemäßen Vorrichtung mit einer Produktrückführleitung.

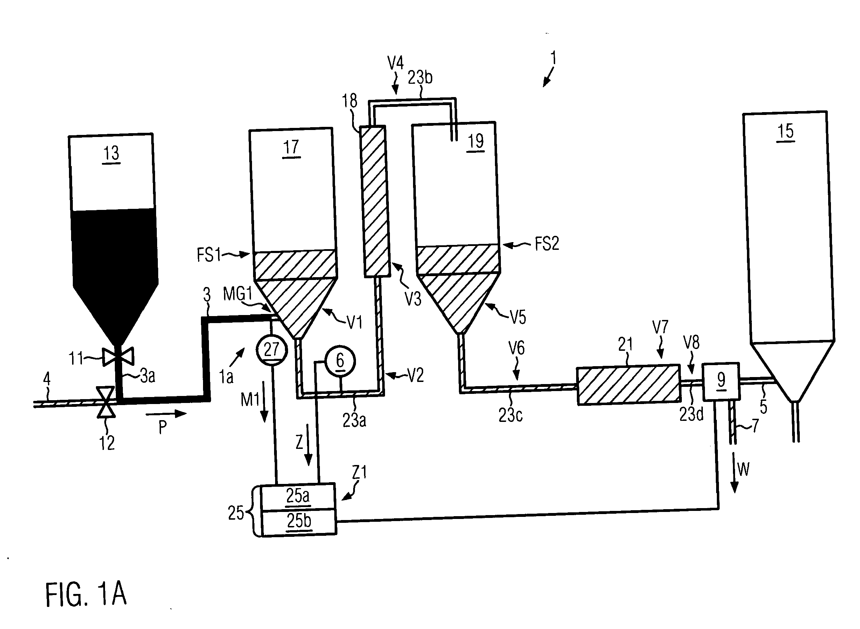

Wie Figur 1A erkennen lässt, umfasst die erste Ausführungsform der erfindungsgemäßen Vorrichtung zur Medienführung durch eine thermische Behandlungsanlage 1 eine einlaufseitige Produktleitung 3, eine in diese mündende einlaufseitige Wasserzuleitung 4, eine auslaufseitige Produktleitung 5, eine Volumenmesseinrichtung 6, beispielsweise einen Volumenzähler, einen auslaufseitigen Wasserabfluss 7 sowie eine auslaufseitige Absperreinrichtung 9 zum Öffnen oder Absperren der auslaufseitigen Produktleitung 5 und zum Öffnen oder Absperren des Wasserabflusses 7. Für den Wasserabfluss 7 könnte jedoch auch eine gesonderte Absperreinrichtung vorgesehen sein. Geeignete Ventile, Klappen oder dergleichen zur Realisierung der Absperreinrichtung 9 sind bekannt und daher nicht weiter beschrieben. An den Medienzuleitungen 3, 4 sind ferner zugehörige Absperreinrichtungen 11, 12 angedeutet.

An einen einlaufseitigen Abschnitt 3a der Produktleitung 3 ist ein Produktbehälter 13 angeschlossen. Der Wasserabfluss 7 führt beispielsweise in einen Wasserkreislauf oder in einen Gully. Entsprechende Abzweigungen können auch an der eingangsseitigen Produktleitung 3 vorgesehen sein, sind jedoch für die Funktionsweise der erfindungsgemäßen Vorrichtung unerheblich und daher nicht dargestellt. Angedeutet ist ferner ein ausgangsseitiger Puffertank 15, der zwischen der ausgangsseitigen Produktleitung 5 und einer nachgeschalteten Produktionseinheit, beispielsweise einer Füllmaschine, angeordnet ist.

Die thermische Behandlungsanlage 1 umfasst im gezeigten Beispiel einen Medienausleitungstank 17 einer Medienanbindungseinheit, eine Vorwärmeinheit 18, eine Entgasungseinheit 19, eine thermische Behandlungseinheit 21 sowie Verbindungsleitungen 23a bis 23d zur Verbindung der Behandlungsanlage 1 mit der ausgangsseitigen Absperreinrichtung 9 sowie zur Verbindung des Medienausleitungstanks 17, der Vorwärmeinheit 18, der Entgasungseinheit 19 und der thermischen Behandlungseinheit 21 untereinander. Die thermische Behandlungseinheit 1 hat ein nominelles Fassungsvermögen VB, das sich aus den Volumina V1 bis V8 der Verbindungsleitungen 23a bis 23d, des Medienausleitungstanks 17, der Vorwärmeinheit 18, der Entgasungseinheit 19 und der thermischen Behandlungseinheit 21, wie in Figur 1A angedeutet, zusammensetzt. Hierbei sind insbesondere die Volumina V1 und V5 nominelle Volumina, die durch Sollfüllstände FS1 und FS2 in dem Medienausleitungstank 17 und der Entgasungseinheit 19 definiert sind.

Die erste Ausführungsform der erfindungsgemäßen Vorrichtung umfasst ferner eine Auswerteeinrichtung 25a und eine Auslöseeinrichtung 25b, die im gezeigten Beispiel in einer Recheneinheit 25 zusammengefasst sind, wobei ein erster Eingang der Auswerteeinrichtung 25a mit einem am Eingang 1a der Behandlungsanlage 1 angeordneten Signalgeber 27 verbunden ist, um von diesem bei einem einlaufseitigen Medienwechsel zu einem ersten Medium ein erstes Markersignal M1 und bei einem Wechsel zu einem zweiten Medium ein zweites Markersignal M2 zu empfangen. Ein zweiter Eingang der Auswerteeinrichtung 25a ist mit der Volumenmesseinrichtung 6 verbunden, um von dieser einen Zählerstand Z vorzugsweise als kontinuierlich aktualisiertes und übertragenes Messsignal zu empfangen. Die Volumenmesseinrichtung 6 kann beispielsweise ein Volumenzähler bekannter Bauart sein, dessen Zählerstand Z unabhängig von der Art des eingeleiteten Mediums durch die Strömung in der eingangsseitigen Verbindungsleitung 23a kontinuierlich erhöht wird.

Der Signalgeber 27 kann beispielsweise eine Messeinrichtung umfassen, die unterschiedliche, vorbei strömende Medien erkennen kann. Grundlage dafür kann unter anderem eine Messung der Leitfähigkeit, eines Zuckergehalts, pH-Werts oder optischer Eigenschaften wie des Absorptionsverhaltens des jeweiligen Mediums sein. Der Signalgeber 27 könnte jedoch auch in die Recheneinheit 25 integriert sein. Er könnte beispielsweise auch manuell ausgelöst werden oder an eingangsseitige Umschaltvorgänge und Durchflussmessungen in den jeweiligen Medienzuleitungen gekoppelt sein. Dies könnte beispielsweise das Öffnen des eingangsseitigen Abschnitts 3a der Produktleitung 3 sein, wobei das Produkt aus dem Produktbehälter 3 dann mit einer bekannten Geschwindigkeit abfließt und zu einem berechenbaren Zeitpunkt die Behandlungsanlage 1 erreicht. Entscheidend ist, dass getrennte Markersignale M1, M2 für aufeinander folgende Medienwechsel und die zugehörigen, in die Behandlungsanlage 1 einströmenden Mediengrenzen MG1, MG2 erzeugt werden können.

Die Auswerteeinrichtung 25a ist vorzugsweise so eingerichtet, dass sie dem ersten Marker M1 und dem zweiten Marker M2 jeweils einen Zählerstand Z der Volumenmesseinrichtung 6 zuordnen kann. Entsprechend kann einem Medienwechsel am Eingang 1a der Behandlungsanlage 1 ein Zählerstand Z oder ein anderer Volumenmesswert der Volumenmesseinrichtung 6 zugeordnet werden. Entsprechend kann bei einem eingangsseitigen Wechsel vom ersten auf das zweite wässrige Medium dem Anfang des zweiten Mediums oder dem Ende des ersten Mediums ein erster Zähler Z1 zugeordnet werden. Ein zweiter Zähler Z2 kann beim nächsten eingangsseitigen Medienwechsel in entsprechender Weise gestartet werden. Es versteht sich von selbst, dass die Zähler Z1, Z2 jeweils vor einem erneuten Start in geeigneter Weise auf Null gestellt werden können, beispielsweise durch Betätigen der ausgangseitigen Absperreinrichtung 9, um dann bei laufender Messung durch fortlaufende Übertragung eines Messsignals oder Zählerstands Z der Volumenmesseinrichtung 6 in der Auswerteeinrichtung 25a erhöht zu werden.

Dadurch lässt sich das Volumen des zwischen zwei aufeinander folgenden Medienwechseln in die Behandlungsanlage 1 einströmenden wässrigen Mediums kontinuierlich erfassen und mit dem nominellen Fassungsvermögen VB der Behandlungsanlage 1 vergleichen. Somit beschreibt ein Zustand, indem das mit der Volumenmesseinrichtung 6 ermittelte eingeströmte Volumen VP eines Produkts P oder das Volumen VW von Wasser W so groß ist wie das nominelle Fassungsvermögen VB der Behandlungsanlage 1, eine vollständige Füllung der Behandlungsanlage 1 mit dem eingeleiteten Produkt P oder Wasser W oder einen Zustand, in dem ein Medienwechsel an der auslaufseitigen Absperreinrichtung 9 auszulösen ist.

Es versteht sich von selbst, dass ein eingangsseitiger Medienwechsel sowohl von dem Produkt P zu Wasser W als auch von Wasser W zu dem Produkt P möglich ist. Dieser Umstand wird berücksichtigt, indem das vor dem eingangsseitigen Medienwechsel eingeleitete wässrige Medium, also das auszuschiebende Medium, allgemein als das erste wässrige Medium bezeichnet wird, und das nach dem Umschaltvorgang eingeleitete Medium, also das ausschiebende Medium, als das zweite wässrige Medium.

Die Auslöseeinrichtung 25b sendet in Abhängigkeit von einem Berechnungsergebnis der Auswerteeinrichtung 25a an die ausgangsseitige Absperreinrichtung 9 ein erstes Triggersignal TS1 zum Öffnen oder ein zweites Triggersignal TS2 zum Schließen derselben. Das Öffnen oder Schließen der ausgangsseitigen Absperreinrichtung 9 erfolgt somit nicht in unmittelbarer Abhängigkeit von einem Umschalten der Medienzuführung, beispielsweise der Absperreinrichtungen 11, 12, sondern in Abhängigkeit von einer bei einem Medienwechsel am Eingang 1a der Behandlungsanlage 1 ausgelösten Volumenmessung mit der Volumenmesseinrichtung 6.

Wird aufgrund der Berechnung der Auswerteeinrichtung 25a festgestellt, dass das behandelte Produkt P die ausgangsseitige Absperreinrichtung 9 erreicht hat, wird diese geöffnet. Umgekehrt wird, wenn festgestellt wird, dass durch die Behandlungsanlage 1 geströmtes Wasser W die ausgangsseitige Absperreinrichtung 9 erreicht, diese abgesperrt, um zu verhindern, dass das Wasser W in die ausgangsseitige Produktleitung 5 gelangt. Entsprechend wird die ausgangsseitige Absperrvorrichtung 9 erst dann geöffnet, wenn nur noch Produkt P, nicht jedoch Wasser W anströmt. Die Funktionsweise der erfindungsgemäßen Vorrichtung wird nachfolgend anhand der Figuren 1A - 1F erklärt, beginnend mit dem Ausschieben von Wasser W aus der Behandlungsanlage 1 mit Hilfe nachströmenden Produkts P, gefolgt von der thermischen Behandlung des Produkts P in der Behandlungsanlage 1 und abschließend gefolgt von dem Ausschieben des Produkts P aus der Behandlungsanlage 1 mit nachströmendem Wasser W.

Vor dem erstmaligen Einfahren des Produkts P ist die Wasserzuleitung 4 vorzugsweise mit der Behandlungsanlage 1 verbunden und insbesondere die gesamte Behandlungsanlage 1 mit Wasser W gefüllt. Dieser Zustand ist in der Zeichnung nicht dargestellt.

Figur 1A zeigt einen Zustand zu Beginn des Einfahrens des Produkts P. Nach Öffnen der Absperreinrichtung 11 und Schließen der Absperreinrichtung 12 fließt das zu behandelnde Produkt P aus dem Produktbehälter 13 in die Produktleitung 3. Sobald die Mediengrenze MG1 zwischen Wasser und Produkt den Eingang 1a der Behandlungsanlage 1 erreicht, hier näherungsweise übereinstimmend mit der Position des Signalgebers 27, wird ein Markersignal M1 an die Auswerteeinrichtung 25a übermittelt. Gleichzeitig wird von der Volumenmesseinrichtung 6 ein Zählerstand Z an die Auswerteeinrichtung 25a übermittelt und ein dem Produktanfang zugeordneter Zähler Z1 gestartet und somit eine Volumenmessung des einströmenden Produkts P gestartet.

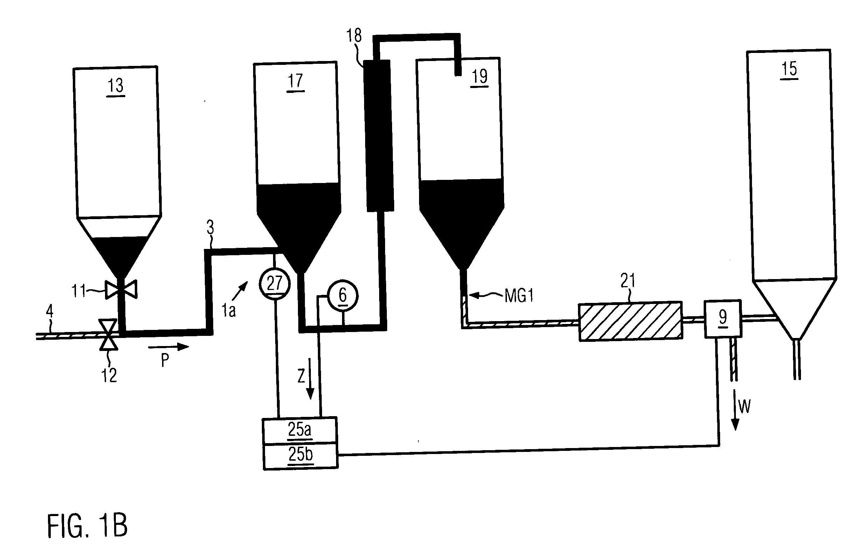

In Figur 1B befindet sich ein Teil des zu behandelnden Produkts P bis zur Mediengrenze MG1 bereits in der Behandlungsanlage 1. Das restliche Produktvolumen befindet sich zu diesem Zeitpunkt noch in dem Produktbehälter 13 und in der eingangsseitigen Produktleitung 3. Ein Teil der Behandlungsanlage 1, in Fig. 1B insbesondere die thermische Behandlungseinheit 21, ist noch mit Wasser W gefüllt. Zur besseren Unterscheidung ist das Produkt P in den Figuren als schwarze Füllung dargestellt, das Wasser W als gestrichelte Füllung. In dem in Figur 1B gezeigten Zustand ist der Zähler Z1 auf einen Wert entsprechend der Position der Mediengrenze MG1 und dem in die Behandlungsanlage 1 eingeströmten Volumen des Produkts P angestiegen.

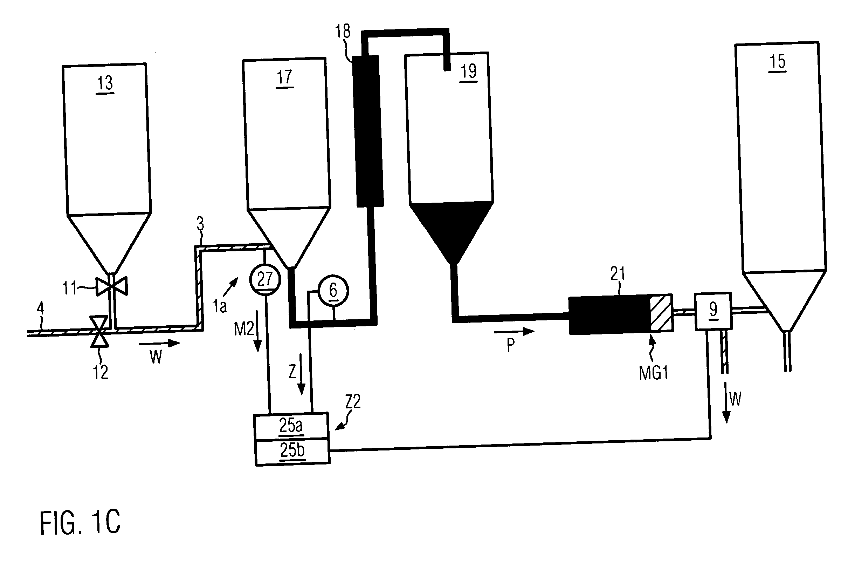

Figur 1C zeigt einen Zustand bei einem Medienwechsel am Eingang 1a der Behandlungsanlage 1 nach dem vollständigen Einlaufen des Produkts P in die Behandlungsanlage 1 und nach Öffnen der Absperreinrichtung 12, so dass anstelle des Produkts P nun Wasser W aus der eingangsseitigen Wasserleitung 4 einströmen kann, um das Produkt P durch die Behandlungsanlage 1 zu schieben. Beim Medienwechsel am Eingang 1a der Behandlungseinrichtung 1 wird ein zweiter Marker M2 erzeugt, der mit einem Zählerstand Z der Volumenmesseinrichtung 6 verknüpft wird, um den zweiten Zähler Z2 zu starten und das Ende des Produkts P bzw. den Anfang des nachströmenden Wassers W zu markieren. Ausgehend von dem nominellen Volumen VB der Behandlungsanlage 1 kann auch diese Mediengrenze beim Durchlaufen der Behandlungsanlage 1 verfolgt werden und bestimmt werden, wann das nachströmende Wasser W die ausgangsseitige Absperreinrichtung 9 erreicht.

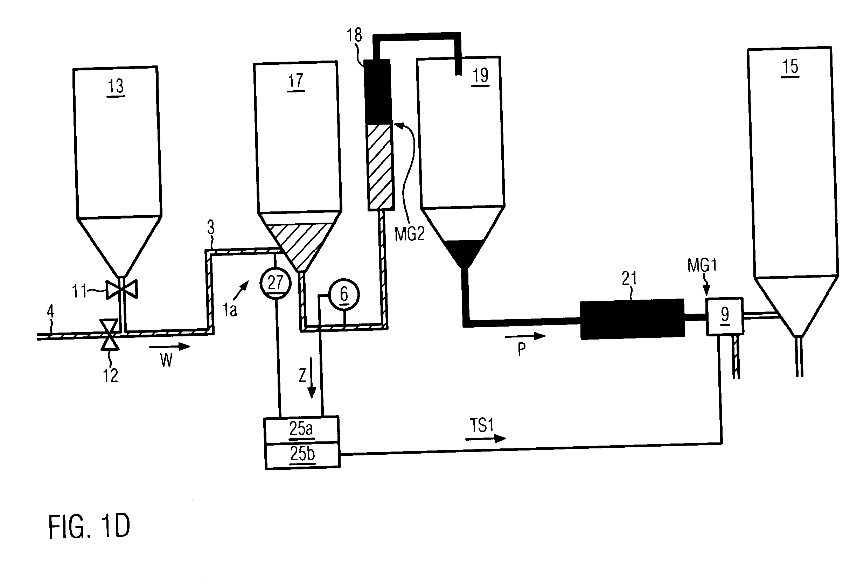

In Figur 1D ist ein Zustand dargestellt, in dem das behandelte Produkt P die ausgangsseitige Absperreinrichtung 9 erreicht. Im Beispiel ist ein Teil der Behandlungsanlage 1 bereits mit nach fließendem Wasser W gefüllt. Die Mediengrenze MG2 entsprechend dem zweiten Medienwechsel ist hier beispielhaft in der Vorwärmeinheit 18 angedeutet. Auf Grundlage des Zählers Z1 und des nominellen Volumens VB der Behandlungsanlage 1 kann ein Zeitpunkt zum Umschalten der ausgangsseitigen Absperreinrichtung 9 ermittelt werden. Dieser Zeitpunkt wird anhand des seit dem Starten des Zählers Z1 eingeströmten Volumens VP bestimmt und ist zeitlich unabhängig von dem nachfolgenden Medienwechsel am Eingang 1a der Behandlungsanlage 1. Die Auslöseeinheit 25b sendet das Triggersignal TS1 zur Absperreinrichtung 9, um diese zu öffnen, wenn das gesamte nach dem Setzen des Markers M1 eingeströmte Volumen so groß ist wie das nominelle Fassungsvermögen der Behandlungsanlage 1. Es kann dann davon ausgegangen werden, dass das gesamte zuvor in der Behandlungsanlage 1 vorhandene Wasser W ausgeschoben wurde und nur noch Produkt P durch die geöffnete Absperreinrichtung 9 in die ausgangsseitige Produktleitung 5 fließen kann.

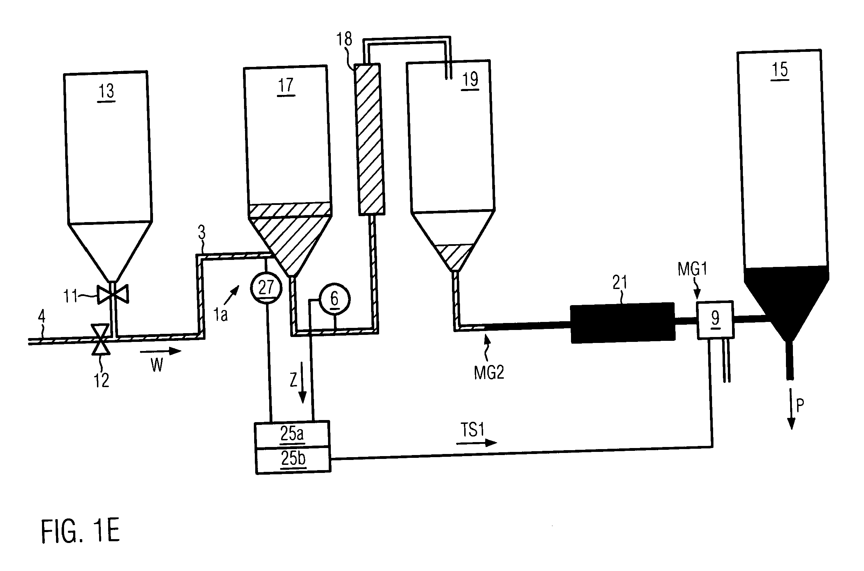

Figur 1E zeigt einen Zustand, in dem das Produkt P durch die geöffnete Absperreinrichtung 9 und die ausgangsseitige Produktleitung 5 in den nach geschalteten Pufferbehälter 15 eingeleitet und von diesem an eine nach geschaltete Produktionseinheit, beispielsweise eine Füllmaschine, weitergeleitet wird. Der erste Zähler Z1 wird in diesem Zustand nicht benötigt und kann wieder auf Null gestellt werden. Der zweite Zählerstand Z2 wird weiter überwacht, um zu ermitteln, wann die Mediengrenze MG2, also das Produktende und der Anfang des nachgeschobenen Wassers W, die ausgangsseitige Absperreinrichtung 9 erreicht.

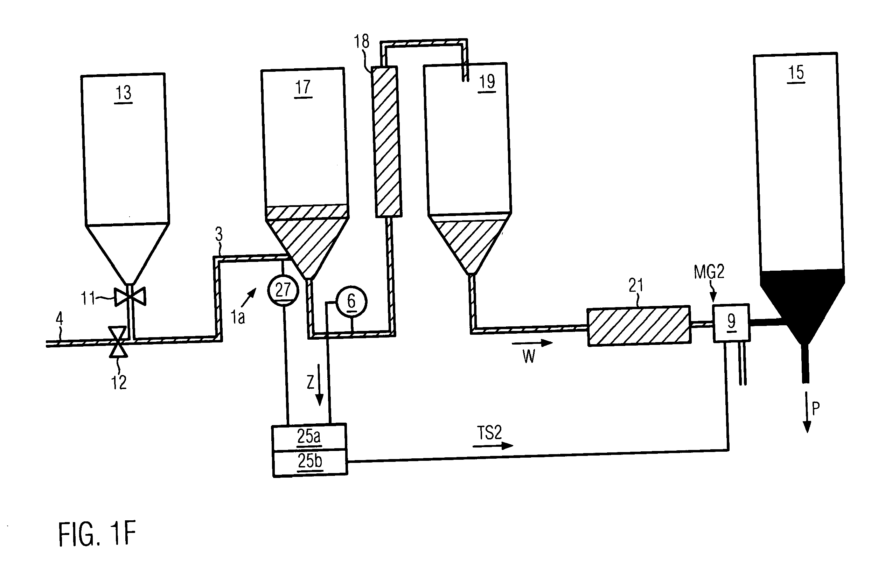

Figur 1F zeigt einen Zustand, in dem das Produkt P vollständig aus der Behandlungsanlage 1 ausgeschoben wurde und das nachschiebende Wasser W die ausgangsseitige Absperreinrichtung 9 erreicht hat. Zu einem Zeitpunkt, an dem das mit Hilfe des Zählerstands Z2 gemessene eingeströmte Wasservolumen VW so groß ist wie das Fassungsvermögen VB der Behandlungsanlage 1, sendet die Auslöseeinrichtung 25b das Triggersignal TS2 an die ausgangsseitige Absperreinrichtung 9, um diese zu schließen. Dadurch wird verhindert, dass das nachströmende Wasser W in die ausgangsseitige Produktleitung 5 fließen kann. Stattdessen wird das nachströmende Wasser W in die ausgangsseitige Wasserleitung 7 geleitet. Nach einer definierten Spülmenge kann auch der Zähler Z2 wieder auf Null gesetzt werden und die Wasserzufuhr durch die Leitung 4 unterbrochen werden. Es könnte nun ein erneuter Medienwechsel, wie im Zusammenhang mit Fig. 1A beschrieben, eingeleitet werden.

Das Setzen getrennter Marker M1, M2 und das Zuordnen der Marker M1, M2 zu Zählerständen Z der Volumenmesseinrichtung 6, wobei unterschiedliche Soll-Zählerstände je nach Anlage und Situation vorgegeben werden können, ermöglicht das unabhängige Nachverfolgen zweier aufeinander folgender Mediengrenzen MG1, MG2, die jeweils durch einen eingangsseitigen Medienwechsel verursacht werden, wobei sich insbesondere der Anfang des jeweils ausschiebenden Mediums mit Hilfe des ersten oder zweiten Zählers Z1, Z2 entlang der Produktströmung lokalisieren lässt.

Somit kann die Absperreinrichtung 9 gezielt geöffnet und wieder verschlossen werden, um das Produkt P mit möglichst geringem Produktverlust aber mit der notwendigen Produktsicherheit in die ausgangsseitige Produktleitung 5 zu leiten. In gleicher Weise kann der Anfang nachströmenden Wassers W durch die Behandlungsanlage 1 verfolgt werden, um zu verhindern, dass nachströmendes Wasser W in die ausgangsseitige Produktleitung 5 einströmt. Die Schaltvorgänge an den eingangsseitigen Absperreinrichtungen 11, 12 und der ausgangsseitigen Absperreinrichtung 9 werden durch die beschriebene Volumenmessung voneinander entkoppelt. Dadurch lässt sich der Produktverlust verknüpft mit der notwendigen Produktsicherheit bei einem eingangsseitigen Medienwechsel verringern.

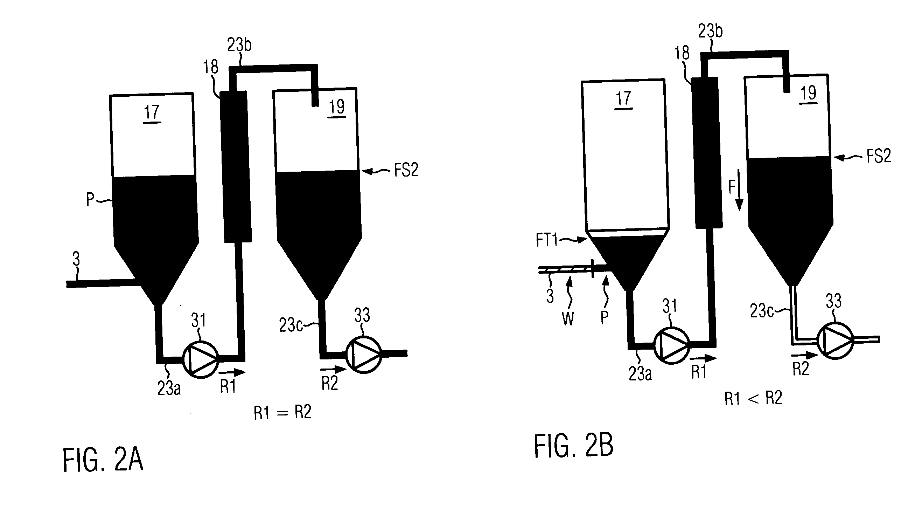

Die Figuren 2A - 2D zeigen eine zweite Ausführungsform der erfindungsgemäßen Vorrichtung, die vorzugsweise als eine Untereinheit der ersten Ausführungsform ausgebildet ist. Die zweite Ausführungsform der Erfindung könnte jedoch auch getrennt von der ersten Ausführungsform ausgeführt werden. Demnach ist, bezogen auf die Entgasungseinheit 19, eine dieser vorgeschaltete eingangsseitige Produktpumpe 31 und eine dieser nachgeschaltete ausgangsseitigen Produktpumpe 33 vorgesehen. Figur 2A zeigt hierbei einen Zustand, in dem Produkt P von dem Medienausleitungstank 17 über die eingangsseitige Pumpe 31 durch die Vorwärmeinheit 18 in die Entgasungseinheit 19 gefördert wird und von dieser über die ausgangsseitige Pumpe 33 in Richtung der in Figur 2A nicht gezeigten thermischen Produktbehandlungseinheit 21 abfließt. In Figur 2A ist die Entgasungseinheit 19 bis zum Sollfüllstand FS2 mit Produkt P gefüllt. Die eingangsseitige Pumpe 31 regelt mit Ihrer Förderate R1 den Istfüllstand F, damit dieser identisch mit dem eingestellten Sollfüllstand FS2 ist.

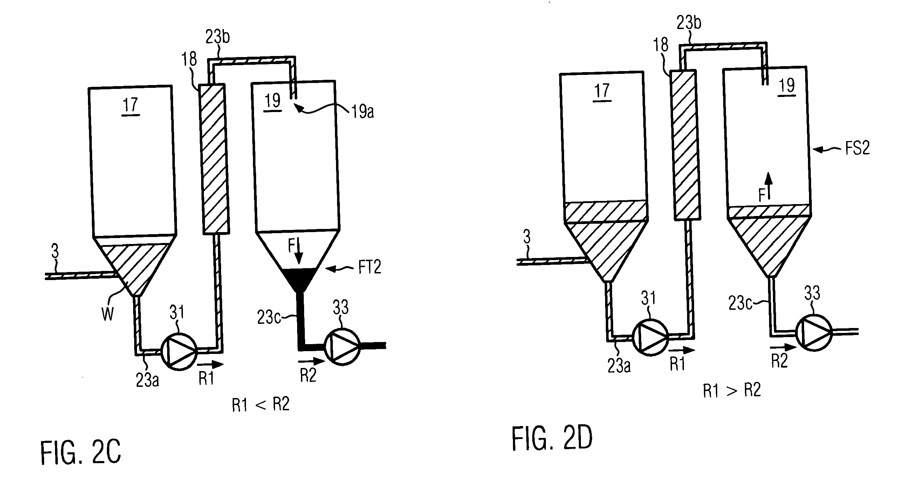

Figur 2B zeigt einen Zustand, in dem die Produktmenge in dem Medienausleitungstank 17 bereits auf einen unteren Schwellenwert FT1 abgesunken ist, um eine bevorstehende Entleerung des Medienausleitungstanks 17 anzukündigen. Bei Erreichen des Schwellenwertes FT1 im Medienausleitungstank 17 wird die Förderrate R1 der eingangsseitigen Pumpe 31 niedriger eingestellt als die Förderrate R2 der ausgangsseitigen Pumpe 33. Folglich wird das Produkt P aus der Entgasungseinheit 19 schneller abgefördert als dieser zugefördert. Folglich sinkt der Füllstand F des Produkts P in der Entgasungseinheit 19 kontinuierlich ab, ohne den Produktfluss durch die Verbindungsleitungen 23a, 23b und die Vorwärmeinheit 18 zu unterbrechen. Beispielsweise wird die erste Förderrate R1 um 5 % bis 20% niedriger eingestellt als die zweite Förderrate R2. Der Unterschied zwischen den Förderraten R1 und R2 wird in Abhängigkeit von dem Schwellenwert FT1 des Füllstands F in dem Medienausleitungstank 17 so berechnet und/oder eingestellt, dass der in Figur 2C dargestellte Zustand erreicht wird.

Wie Figur 2C verdeutlicht, bewirken die unterschiedlichen Förderraten R1, R2, dass genau zu dem Zeitpunkt, an dem nachströmendes Wasser W den Eingang 19a der Entgasungseinheit 19 erreicht, der Füllstand F des Produkts in der Entgasungseinheit 19 einen Mindestfüllstand in Form eines Schwellenwerts FT2 erreicht. Somit kann bei einem Medienwechsel in der Entgasungseinheit 19 ein kontinuierlicher Produktfluss aufrecht erhalten werden. Dadurch wird eine Überhitzung des Produkts P in dem der Entgasungseinheit 19 vorgeschalteten Wärmetauscher 18 vermieden. Das Produkt P kann nun vollständig aus der Entgasungseinheit 19 ausgeleitet werden.

Figur 2D zeigt einen Zustand, in dem das Produkt P vollständig aus den Leitungen 23a und 23b sowie aus der Entgasungseinheit 19 ausgeleitet wurde. Entsprechend sind die Leitungen 23b und 23c, die Vorwärmeinheit 18 und die Entgasungseinheit 19 mit Wasser W gefüllt. Um die Entgasungseinheit 19 bis zu dem Sollfüllstand FS2 mit Wasser zu füllen, wird die Förderrate R1 der eingangsseitigen Pumpe 31 höher eingestellt als die Förderrate R2 der ausgangsseitigen Pumpe 33. Somit kann der Füllstand F des Wassers W in der Entgasungseinheit 19 kontinuierlich bis zum Sollwert FS2 angehoben werden, ohne die Wasserströmung durch die ausgangsseitige Verbindungsleitung 23c unterbrechen zu müssen. Beispielsweise wird die Förderrate R1 dabei um 5 % bis 20% höher eingestellt als die Förderrate R2.

Durch das Berechnen und/oder Festwert-Einstellen unterschiedlicher Förderraten R1, R2 der Pumpen 31 und 33 in Abhängigkeit von dem Füllstand F in dem Medienausleitungstank 17 und/oder in der Entgasungseinheit 19 können zeitliche Schwankungen des Durchflusses durch den eingangsseitigen Bereich der Entgasungseinheit 19, insbesondere durch einen vorgelagerten Wärmetauscher 18, reduziert werden. Dadurch lässt sich eine gleichmäßige Produktqualität sicherstellen und vermeiden, dass überhitztes Produkt P ausgesondert werden muss. Somit können auch mit der zweiten Ausführungsform der Erfindung Produktverluste reduziert werden.

Die eingangsseitigen und ausgangsseitigen Förderraten R1, R2 können beispielsweise durch ein vorgegebenes Verhältnis der Förderraten eingestellt werden, oder auch durch eine kontinuierliche Anpassung der Förderrate R1 und/oder R2 in Abhängigkeit von dem Füllstand F in dem Medienausleitungstank 17 und/oder in der Entgasungseinheit 19. Die Pumpen 31, 33 und (nicht dargstellte) Füllstandsmesseinrichtungen an dem Medienausleitungstank 17 und der Entgasungseinheit 19 sind vorzugsweise mit einer Steuereinheit verbunden, die beispielsweise in die Recheneinheit 25 integriert sein könnte.

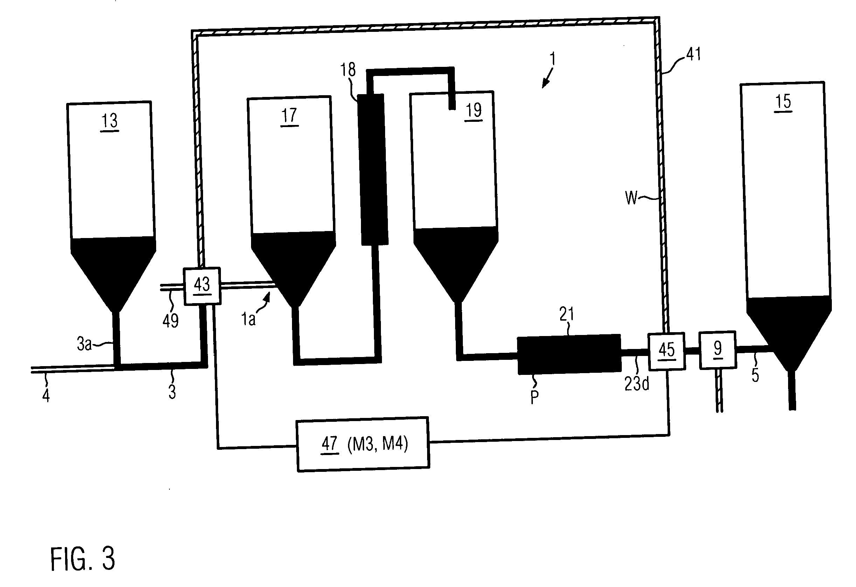

Figur 3 zeigt eine dritte Ausführungsform der Erfindung, bei der eine Produktrückführleitung 41 vorgesehen ist, um ein in der Behandlungsanlage 1 behandeltes Produkt während eines Stillstands einer nachgeschalteten Produktionseinheit, beispielsweise einem Produktlagertank, im Kreislauf durch die Rückführleitung 41 und die Behandlungsanlage 1 zu fahren. Es versteht sich von selbst, dass die dritte Ausführungsform der Erfindung getrennt von den ersten beiden Ausführungsformen oder aber in Kombination mit mindestens einer der vorgenannten Ausführungsformen verwendet werden kann. Die Produktrücklaufleitung 41 kann vorzugsweise an den Eingang 1a und die ausgangsseitige Verbindungsleitung 23d der Behandlungsanlage 1 angeschlossen werden, beispielsweise mittels Umschalt- oder Absperreinrichtungen 43, 45 an. Letztere könnte auch in die ausgangsseitige Absperreinrichtung 9 integriert sein.

Figur 3 zeigt einen Betriebszustand, bei dem die eingangsseitige Produktleitung 3, die Behandlungsanlage 1 und die ausgangsseitige Produktleitung 5 mit Produkt P durchströmt werden, zu einem Zeitpunkt nach dem Anfahren der Behandlungsanlage 1 und vor einem erstmaligen Auftreten eines Stillstands in einer nachfolgenden Produktionseinheit, insbesondere in einem Produktstapeltank. Wie Figur 3 ferner verdeutlicht, ist in diesem Zustand die Produktrücklaufleitung 41 mit Wasser W gefüllt, obwohl die eingangsseitige Produktleitung 3, die Behandlungsanlage 1 und die ausgangsseitige Produktleitung 5 bereits mit Produkt P durchströmt werden. Folglich sind die Absperreinrichtungen 43 und 45 in Richtung der Rücklaufleitung 41 abgesperrt. In diesem Zustand wird in einer Steuereinheit 47, die beispielsweise in die Recheneinheit 33 der ersten Ausführungsform integriert sein könnte, eine Marke M3 gesetzt, die anzeigt, dass die Produktrücklaufleitung 41 mit Wasser W gefüllt ist.

Tritt in der nachgeschalteten Produktionseinheit ein Stillstand ein, so ist das Produkt P durch die Produktrücklaufleitung 41 und die Behandlungsanlage 1 im Kreis zu fahren. Zu diesem Zweck wird die Absperreinrichtung 45 in Richtung der Produktrücklaufleitung 41 geöffnet und in Richtung der ausgangsseitigen Produktleitung 5 geschlossen. Gleichzeitig wird die Absperreinrichtung 43 in Richtung eines Ablaufs 49 geöffnet, so dass das in der Rücklaufleitung 41 vorhandene Wasser W mit nachströmendem Produkt P aus dieser ausgeschoben werden kann. Ist die Produktrücklaufleitung 41 vollständig mit Produkt P gefüllt, kann die Absperreinrichtung 43 in Richtung des Auslasses 49 geschlossen und in Richtung der Behandlungsanlage 1 geöffnet werden, um das Produkt im Kreislauf zu fahren.

Nach Beendigung des Stillstands in der nachgeschalteten Produktionseinheit können die Absperreinrichtungen 43, 45 in Richtung der Produktrücklaufleitung 41 wieder abgesperrt werden. Entsprechend kann das Produkt P wieder durch die eingangsseitige Produktleitung 3, die Behandlungsanlage 1 und die ausgangsseitige Produktleitung 5 in Richtung der nachgeschalteten Produktionseinheit gefördert werden. Es wird nun ein weiterer Marker M4 gesetzt, der anzeigt, dass die Produktrücklaufleitung 41 mit Produkt P gefüllt ist. Entsprechend kann bei einem weiteren Stillstand in der nachgeschalteten Produktionseinheit Produkt P unmittelbar nach Umschalten der Absperreinrichtungen 43, 45 im Kreislauf gefahren werden.

Dadurch, dass die Produktrücklaufleitung 41 bis zu einem erstmaligen Stillstand in einer nachgeschalteten Produktionseinheit mit Wasser W gefüllt bleibt, kann ein Produktverlust in den Fällen vermieden werden, in denen ein Stillstand in der nachgeschalteten Produktionseinheit während der Behandlung einer Charge nicht auftritt. Durch dieses Verfahren entsteht keine Minderung der Produktqualität, da das Produkt P auch beim Ausschieben des Wassers W aus der Produktrücklaufleitung 41 in der Behandlungseinheit 1 nicht zum Stillstand kommt. Das bedarfsabhängige Füllen der Produktrücklaufleitung 41 mit Produkt ist insbesondere bei kleinen Produktchargen von Vorteil. Je nach Anlagengröße haben Produktrücklaufleitungen 41 üblicherweise ein Fassungsvermögen von 100 bis 700 Litern. Durch das erfindungsgemäße Verfahren entsprechend der dritten Ausführungsform lässt sich somit eine dem Fassungsvermögen der Produktrücklaufleitung 41 entsprechende Produktmenge einsparen.

Die beschriebenen Ausführungsformen der Erfindung ermöglichen eine erhebliche Einsparung von Ressourcen und tragen dazu bei, Produktverluste zu reduzieren. Neben der höheren Produktausbeute können auch Abwassermengen reduziert werden und die Abwasserqualität verbessert werden. Außerdem können Temperaturschwankungen, insbesondere in einem Eingangsbereich einer Entgasungseinheit 19, reduziert werden.

Besonders vorteilhaft ist es, dass Restmengen an behandeltem Produkt P, die kleiner sind als das Fassungsvermögen VB der thermischen Behandlungsanlage 1, vollständig oder nahezu vollständig verwertet werden können. Außerdem ist es im Gegensatz zu bekannten thermischen Behandlungsanlagen möglich, Produktvolumina VP, die kleiner sind als das Fassungsvermögen VB der thermischen Behandlungsanlage 1, zu behandeln. Dies ist beispielsweise in den Figuren 1A bis 1F angedeutet. Die Figur 3 zeigt dagegen eine Produktcharge, die größer ist als das Fassungsvermögen VB der Behandlungsanlage 1. Die dargestellten Füllstände der Behälter 13, 15, 17 bis 19 und 21 dienen lediglich der Veranschaulichung und sind nicht maßstäblich.

## Patentansprüche

1. Verfahren zur Medienführung durch eine thermische Behandlungsanlage (1) für ein flüssiges Produkt (P), insbesondere ein Getränk, mit folgenden Schritten:
a) Ausschieben eines ersten wässrigen Mediums aus der Behandlungsanlage (1) durch eine ausgangsseitige Produktleitung (5) mit Hilfe eines zweiten wässrigen Mediums, wobei das Volumen des dabei in die Behandlungsanlage (1) eingeleiteten zweiten wässrigen Mediums ermittelt wird, insbesondere in Form einer kontinuierlichen Volumenzählung; und
b) Absperren der ausgangsseitigen Produktleitung (5), so dass das zweite wässrige Medium nicht in die Produktleitung (5) einströmen kann, wobei ein Auslöser (TS2) zum Absperren der ausgangsseitigen Produktleitung (5) auf Grundlage des im Schritt a) ermittelten Volumens und eines nominellen Fassungsvermögens (VB) der Behandlungsanlage (1) berechnet wird.

2. Verfahren zur Medienführung durch eine thermische Behandlungsanlage (1) für ein flüssiges Produkt (P), insbesondere ein Getränk, mit folgenden Schritten:
a) Ausschieben eines ersten wässrigen Mediums aus der Behandlungsanlage (1) durch eine ausgangsseitige Produktleitung (5) mit Hilfe eines zweiten wässrigen Mediums, wobei das Volumen des dabei in die Behandlungsanlage (1) eingeleiteten zweiten wässrigen Mediums ermittelt wird, insbesondere in Form einer kontinuierlichen Volumenzählung; und
c) Öffnen der ausgangsseitigen Produktleitung (5), so dass das zweite wässrige Medium in die Produktleitung (5) einströmen kann, wobei ein Auslöser (TS1) zum Öffnen der ausgangsseitigen Produktleitung (5) auf Grundlage des im Schritt a) ermittelten Volumens und eines nominellen Fassungsvermögens (VB) der Behandlungsanlage berechnet wird.

3. Verfahren nach Anspruch 1, wobei das erste wässrige Medium das Produkt (P) und das zweite wässrige Medium Wasser (W) ist.

4. Verfahren nach Anspruch 2, wobei das erste wässrige Medium Wasser (W) und das zweite wässrige Medium das Produkt (P) ist.

5. Verfahren nach Anspruch 4, wobei das eingeleitete Volumen (VP) des Produkts (P) kleiner ist als das nominelle Fassungsvermögen (VB) der Behandlungsanlage (1).

6. Verfahren nach wenigstens einem der vorigen Ansprüche, bei dem durch ein Umschalten der Medienzufuhr in die Behandlungsanlage (1) von dem ersten wässrigen Medium auf das zweite wässrige Medium eine Volumenmessung des in die Behandlungsanlage (1) eingeleiteten zweiten wässrigen Mediums gestartet wird.

7. Verfahren nach Anspruch 6, bei dem ein einem Wechsel der Medienzufuhr in die Behandlungsanlage (1) zugeordneter erster Marker (M1) erzeugt wird, falls das zweite wässrige Medium das Produkt (P) ist, und/oder ein zweiter Marker (M2) erzeugt wird, falls das zweite wässrige Medium Wasser (W) ist, um den Start der Volumenmessung dem jeweiligen Medium (P, W) zuzuordnen.

8. Verfahren nach wenigstens einem der vorigen Ansprüche, bei dem das im Schritt a) ermittelte Volumen (VP, VW) mit dem nominellen Fassungsvermögen (VB) der Behandlungsanlage (1) verglichen wird oder ein Verhältnis mit letzteren berechnet wird, um die Position eines Übergangsbereichs von dem ersten zum zweiten wässrigen Medium in der Behandlungsanlage (1) zu ermitteln.

9. Verfahren nach wenigstens einem der vorigen Ansprüche, bei dem ferner eine Zuförderrate (R1) zu einer in der Behandlungsanlage (1) vorgesehenen Entgasungseinheit (19) hin, insbesondere bei einem Medienwechsel, niedriger eingestellt wird als eine Abförderrate (R2) von der Entgasungseinheit (19) weg, um den Füllstand (F) des ersten wässrigen Mediums in der Entgasungseinheit (19) auf einen vorgegebenen Mindestwert (FT2) zu einem Zeitpunkt abzusenken, an dem das zweite wässrige Medium einen Eingang (19a) der Entgasungseinheit (19) erreicht.

10. Verfahren nach Anspruch 9, bei dem ferner die Zuförderrate (R1) beim Einlaufen des zweiten wässrigen Mediums in die Entgasungseinheit (19) höher eingestellt wird als die Abförderrate (R2), um den Füllstand (F) des zweiten wässrigen Mediums auf einen Sollfüllstand (FS2) in der Entgasungseinheit (19) anzuheben.

11. Verfahren nach Anspruch 4, ferner mit einem auf den Schritt c) folgenden Schritt d), in dem:
die Behandlungsanlage (1) von dem Produkt (P) durchströmt wird;
ein erster Betriebszustand durch einen Zustand vor einer erstmaligen Unterbrechung des Produktstroms in einer nach geschalteten Produktionsanlage definiert ist;
ein zweiter Betriebszustand durch einen Zustand nach der erstmaligen Unterbrechung des Produktstroms in der nach geschalteten Produktionsanlage definiert ist;
eine Produktrücklaufleitung (41) zum Rückführen behandelten Produkts in einen Eingangsbereich (1 a) der Behandlungsanlage (1) im ersten Betriebszustand mit Wasser (W) gefüllt ist;
das Wasser (W) bei der Unterbrechung des Produktstroms mit dem Produkt (P) aus der Produktrückführleitung (41) ausgeschoben wird; und
die Produktrücklaufleitung (41) im zweiten Betriebszustand mit Produkt (P) gefüllt ist.

12. Verfahren nach Anspruch 11, bei dem dem ersten und zweiten Betriebszustand jeweils ein Marker (M3, M4) zugeordnet ist, um bei der Unterbrechung des Produktstroms in der nachgeschalteten Produktionsanlage entweder zunächst Wasser (W) aus der Produktrückführleitung (41) auszuschieben oder Produkt (P) zurückzuführen.

13. Vorrichtung zur Medienführung in einer thermischen Behandlungsanlage (1) für ein flüssiges Produkt, insbesondere ein Getränk, mit:
- einer Volumenmesseinrichtung (6) zum Messen eines durch die Behandlungsanlage (1) geleiteten Flüssigkeitsvolumens;
- einer ausgangsseitigen Produktleitung (5) zum Weiterleiten des behandelten Produkts (P) in Richtung einer nachfolgenden Produktionseinheit, insbesondere eines Produktstapeltanks;
- einer Absperreinrichtung (9) zum Absperren oder Öffnen der ausgangsseitigen Produktleitung (5),
- eine Auswerteeinrichtung (25a), die eingerichtet ist, mindestens ein Messergebnis (Z1, Z2) der Volumenmesseinrichtung (6) mit einem nominellen Fassungsvermögen (VB) der Behandlungsanlage (1) zu vergleichen; und
- eine Auslöseeinrichtung (25b), die die Absperreinrichtung (9) in einen geöffneten oder geschlossenen Zustand versetzt in Abhängigkeit des Vergleichs in der Auswerteeinrichtung (25a).

14. Vorrichtung nach Anspruch 13, ferner mit einem Signalgeber (27) zum Erzeugen eines einem Wechsel der Medienzufuhr in die Behandlungsanlage (1) zugeordneten Markers (M1, M2).

15. Vorrichtung nach Anspruch 13 oder 14, ferner mit einer ersten im Produktstrom vor einer in der Behandlungsanlage (1) vorgesehen Entgasungseinheit (19) und einer zweiten im Produktstrom nach der Entgasungseinheit (19) angeordneten Pumpe (31, 33) , und ferner mit einer Steuerungseinrichtung, die die Förderrate (R1) der ersten Pumpe (31) in Abhängigkeit von einem Füllstand (F) in der Entgasungseinheit (19) und/oder einem der Entgasungseinheit vorgeschalteten Behälter (17) einstellen kann.

## Claims

1. Method of leading media through a thermal treatment system (1) for a liquid product (P), in particular a beverage, comprising the following steps:
a) expelling a first aqueous medium from the treatment system (1) through a product pipe (5) on the outlet side with the aid of a second aqueous medium, wherein the volume of the second aqueous medium led into the treatment system (1) in the process is determined, in particular in the form of a continuous volume count; and
b) shutting off the product pipe (5) on the outlet side, so that the second aqueous medium cannot flow into the product pipe (5), wherein a trigger (TS2) for shutting off the product pipe (5) on the outlet side is calculated on the basis of the volume determined in step a) and a nominal capacity (VB) of the treatment system (1).

2. Method of leading media through a thermal treatment system (1) for a liquid product (P), in particular a beverage, comprising the following steps:
a) expelling a first aqueous medium from the treatment system (1) through a product pipe (5) on the outlet side with the aid of a second aqueous medium, wherein the volume of the second aqueous medium led into the treatment system (1) in the process is determined, in particular in the form of a continuous volume count; and
c) opening the product pipe (5) on the outlet side, so that the second aqueous medium can flow into the product pipe (5), wherein a trigger (TS1) for opening the product pipe (5) on the outlet side is calculated on the basis of the volume determined in step a) and a nominal capacity (VB) of the treatment system.

3. Method according to claim 1, wherein the first aqueous medium is the product (P) and the second aqueous medium is water (W).

4. Method according to claim 2, wherein the first aqueous medium is water (W) and the second aqueous medium is the product (P).

5. Method according to claim 4, wherein the introduced volume (VP) of the product (P) is smaller than the nominal capacity (VB) of the treatment system (1).

6. Method according to at least one of the preceding claims, wherein by changing over the medium supply into the treatment system (1) from the first aqueous medium to the second aqueous medium, a volume measurement of the second aqueous medium led into the treatment system (1) is started.

7. Method according to claim 6, wherein a first marker (M1) assigned to a changeover of the medium supply into the treatment system (1) is generated if the second aqueous medium is the product (P), and/or a second marker (M2) is generated if the second aqueous medium is water (W) to assign the start of volume measurement to the respective medium (P, W).

8. Method according to at least one of the preceding claims, wherein the volume (VP, VW) determined in step a) is compared to the nominal capacity (VB) of the treatment system (1), or a ratio to the latter is calculated to determine the position of a transition area from the first to the second aqueous medium in the treatment system (1).

9. Method according to at least one of the preceding claims, wherein furthermore a supply rate (R1) to a degassing unit (19) provided in the treatment system (1) is set to be lower than a discharge rate (R2) away from the degassing unit (19), in particular during a medium change, in order to lower the filling level (F) of the first aqueous medium in the degassing unit (19) to a predetermined minimum value (FT2) at a point in time when the second aqueous medium reaches an entrance (19a) of the degassing unit (19).

10. Method according to claim 9, wherein furthermore the supply rate (R1) is set to be higher than the discharge rate (R2) while the second aqueous medium is flowing into the degassing unit (19) in order to raise the filling level (F) of the second aqueous medium to a desired filling level (FS2) in the degassing unit (19).

11. Method according to claim 4, further comprising a step d) following step c), wherein
- the product (P) flows through the treatment system (1);
- a first operating state is defined by a state before a first interruption of the product flow in a downstream production system;
- a second operating state is defined by a state after the first interruption of the product flow in the downstream production system;
- a product return pipe (41) for returning treated product into an entrance area (1a) of the treatment system (1) is filled with water (W) in the first operating state;
- the water (W) is expelled from the product return pipe (41) by the product (P) when the product flow is interrupted; and
- the product return pipe (41) is filled with product (P) in the second operating state.

12. Method according to claim 11, wherein one marker (M3, M4) is assigned each to the first and the second operating state to either first expel water (W) from the product return pipe (41) or return product (P) during the interruption of the product flow in the downstream production system.

13. Device for leading media in a thermal treatment system (1) for a liquid product, in particular a beverage, comprising:
- a volume measuring means (6) for measuring a liquid volume led through the treatment system (1);
- a product pipe (5) on the outlet side for forwarding the treated product (P) towards a subsequent production unit, in particular a product batch tank;
- a shut off means (9) for shutting off or opening the product pipe (5) on the outlet side,
- an evaluation means (25a) adjusted to compare at least one measuring result (Z1, Z2) of the volume measuring means (6) to a nominal capacity (VB) of the treatment system (1); and
- a trigger device (25b) setting the shut off means (9) to an opened or closed state depending on the comparison in the evaluation means (25a).

14. Device according to claim 13, further comprising a signal generator (27) for generating a marker (M1, M2) assigned to a changeover of the medium supply into the treatment system (1).

15. Device according to claim 13 or 14, further comprising a first pump (31) arranged in the product flow upstream of a degassing unit (19) provided in the treatment system (1), and a second pump (33) arranged in the product flow downstream of the degassing unit (19), and further with a control means which can adjust the conveying rate (R1) of the first pump (31) in response to a filling level (F) in the degassing unit (19) and/or a container (17) upstream of the degassing unit.

## Revendications

1. Procédé pour le guidage de fluides à travers une installation de traitement thermique (1) pour un produit liquide (P), en particulier une boisson, avec les étapes qui consistent :
a) à évacuer de l'installation de traitement (1) un premier fluide aqueux, par une conduite de produit côté sortie (5), à l'aide d'un second fluide aqueux, étant précisé que le volume du second fluide aqueux introduit dans l'installation de traitement (1) est déterminé, en particulier sous forme de comptage de volume continu ; et
b) à fermer la conduite de produit côté sortie (5), de sorte que le second fluide aqueux ne peut pas entrer dans ladite conduite de produit (5), étant précisé qu'un déclencheur (TS2) destiné à fermer la conduite de produit côté sortie (5) est calculé sur la base du volume déterminé lors de l'étape a) et d'une capacité nominale (VB) de l'installation de traitement (1).

2. Procédé pour le guidage de fluides à travers une installation de traitement thermique (1) pour un produit liquide (P), en particulier une boisson, avec les étapes qui consistent :
a) à évacuer de l'installation de traitement (1) un premier fluide aqueux, par une conduite de produit côté sortie (5), à l'aide d'un second fluide aqueux, étant précisé que le volume du second fluide aqueux introduit dans l'installation de traitement (1) est déterminé, en particulier sous forme de comptage de volume continu ; et
c) à ouvrir la conduite de produit côté sortie (5), de sorte que le second fluide aqueux peut entrer dans la conduite de produit (5), étant précisé qu'un déclencheur (TS1) destiné à ouvrir la conduite de produit côté sortie (5) est calculé sur la base du volume déterminé lors de l'étape a) et d'une capacité nominale (VB) de l'installation de traitement.

3. Procédé selon la revendication 1, étant précisé que le premier fluide aqueux est constitué par le produit (P), et le second fluide aqueux par de l'eau (W).

4. Procédé selon la revendication 2, étant précisé que le premier fluide aqueux est constitué par de l'eau (W), et le second fluide aqueux par le produit (P).

5. Procédé selon la revendication 4, étant précisé que le volume introduit (VP) du produit (P) est inférieur à la capacité nominale (VB) de l'installation de traitement (1).

6. Procédé selon l'une au moins des revendications précédentes, selon lequel un changement d'amenée de fluide dans l'installation de traitement (1) pour passer du premier au second fluide aqueux entraîne le démarrage d'une mesure de volume du second fluide aqueux introduit dans l'installation de traitement (1).

7. Procédé selon la revendication 6, étant précisé qu'un premier marqueur (M1) associé à un changement d'amenée de fluide dans l'installation de traitement (1) est généré au cas où le second fluide aqueux est constitué par le produit (P), et/ou un second marqueur (M2) est généré au cas où le second fluide aqueux est constitué par de l'eau (W), afin d'associer le démarrage de la mesure de volume au fluide correspondant (P, W).

8. Procédé selon l'une au moins des revendications précédentes, selon lequel le volume (VP, VW) déterminé lors de l'étape a) est comparé à la capacité nominale (VB) de l'installation de traitement (1), ou un rapport est calculé avec ceux-ci afin de déterminer la position d'une zone de transition du premier au second fluide aqueux dans l'installation de traitement (1).

9. Procédé selon l'une au moins des revendications précédentes, selon lequel une vitesse d'amenée (R1) vers une unité de dégazage (19) prévue dans l'installation de traitement (1), en particulier lors d'un changement de fluide, est également réglée pour être inférieure à une vitesse d'évacuation (R2) hors de l'unité de dégazage (19), afin d'abaisser le niveau (F) du premier fluide aqueux dans l'unité de dégazage (19) jusqu'à une valeur minimale prédéfinie (FT2) à un moment où le second fluide aqueux atteint une entrée (19a) de l'unité de dégazage (19).

10. Procédé selon la revendication 9, selon lequel la vitesse d'amenée (R1) lors de l'arrivée du second fluide aqueux dans l'unité de dégazage (19) est réglé pour être supérieur à la vitesse d'évacuation (R2), afin d'augmenter le niveau (F) du second fluide aqueux jusqu'à un niveau théorique (FS2) dans l'unité de dégazage (19).

11. Procédé selon la revendication 4, comprenant également une étape d), à la suite de l'étape c), lors de laquelle :
l'installation de traitement (1) est traversée par le produit (P) ;
un premier état de fonctionnement est défini par un état précédant une première interruption de l'écoulement de produit dans une installation de production montée en aval ;
un second état de fonctionnement est défini par un état suivant la première interruption de l'écoulement de produit dans l'installation de production montée en aval ;
une conduite de retour de produit (41) destinée à ramener le produit traité dans une zone d'entrée (1a) de l'installation de traitement (1) est remplie d'eau (W) lors du premier état de fonctionnement ;
lors de l'interruption de l'écoulement de produit, l'eau est évacuée, avec le produit (P), de la conduite de retour (41) ; et
la conduite de retour de produit (41) est remplie de produit (P) dans le second état de fonctionnement.

12. Procédé selon la revendication 11, selon lequel des marqueurs respectifs (M3, M4) sont associés aux premier et second états de fonctionnement afin d'évacuer tout d'abord l'eau (W) de la conduite de retour de produit (41) ou de remettre le produit (P) en circulation, lors de l'interruption de l'écoulement de produit dans l'installation de production montée en aval.

13. Dispositif pour le guidage de fluides dans une installation de traitement thermique (1) pour un produit liquide, en particulier une boisson, avec :
- un dispositif de mesure de volume (6) pour mesurer un volume de liquide qui traverse l'installation de traitement (1) ;
- une conduite de produit côté sortie (5) pour acheminer le produit (P) traité en direction d'une unité de production suivante, en particulier un réservoir de stockage de produit ;
- un dispositif de fermeture (9) pour fermer ou ouvrir la conduite de produit côté sortie (5),
- un dispositif d'analyse (25a) qui est conçu pour comparer au moins un résultat de mesure (Z1, Z2) du dispositif de mesure (6) à une capacité nominale (VB) de l'installation de traitement (1) ; et
- un dispositif de déclenchement (25b) qui fait passer le dispositif de fermeture (9) à une position ouverte ou fermée, en fonction de la comparaison dans le dispositif d'analyse (25a).

14. Dispositif selon la revendication 13, comportant également un émetteur de signaux (27) pour générer un marqueur (M1, M2) associé à un changement d'amenée de fluide dans l'installation de traitement (1).

15. Dispositif selon la revendication 13 ou 14, comportant également des première et seconde pompes (31, 33) disposées respectivement, dans l'écoulement de produit, en amont et en aval d'une première unité de dégazage (19) prévue dans l'installation de traitement (1), et un dispositif de commande qui peut régler le débit (R1) de la première pompe (31) en fonction d'un niveau (F) dans l'unité de dégazage (19) et/ou dans un récipient (17) monté en amont de l'unité de dégazage.
